# EUROPÄISCHE PATENTSCHRIFT

(11) **EP 2 205 886 B1**
(45) Veröffentlichungstag und Bekanntmachung des Hinweises auf die Patenterteilung: **08.06.2011**
(21) Anmeldenummer: 08842335.5
(22) Anmeldetag: 09.10.2008
(51) Int. Cl.: F16D 65/097, F16D 66/02

(54) **BREMSBELAG EINER SCHEIBENBREMSE**
BRAKE PAD OF A DISC BRAKE
GARNITURE DE FREIN D'UN FREIN À DISQUE

(30) Priorität: 18.10.2007 DE 102007049981
(43) Veröffentlichungstag der Anmeldung: 14.07.2010
(73) Patentinhaber: KNORR-BREMSE Systeme für Nutzfahrzeuge GmbH, 80809 München (DE)
(72) Erfinder: KREUZEDER, Robert, 84329 Wurmannquick (DE)
(74) Vertreter: Mattusch, Gundula
(86) Internationale Anmeldenummer: PCT/EP2008/008542
(87) Internationale Veröffentlichungsnummer: WO 2009/052957

(56) Entgegenhaltungen:
- EP-A- 1 496 283
- WO-A-2007/051615
- WO-A-2007/068464
- DE-A1-102005 055 118

## Beschreibung

Die Erfindung betrifft einen Bremsbelag einer Scheibenbremse nach dem Oberbegriff des Anspruchs 1.

Bekanntermaßen unterliegen die Reibbeläge von Bremsbelägen einem betriebsbedingten Verschleiß, der aus Gründen der Betriebssicherheit überwacht wird, so dass spätestens bei Erreichen einer Minimaldicke des Reibbelages der Bremsbelag ausgewechselt werden kann.

Zur Überwachung des Reibbelag-Verschleißes kommt eine elektrische Verschleißendanzeige zum Einsatz, die einen randseitig in die Belagträgerplatte des Bremsbelages eingefügten Fühler aufweist, der über elektrische Kabel an eine Auswerteeinheit angeschlossen ist.

In der WO 2007/051615 A1 ist ein Bremsbelag gezeigt und beschrieben, der mit einer Belaghaltefeder ausgestattet ist, die sich an einem Außenrandbereich der Belagträgerplatte abstützt und die mittels einer Haube unlösbar mit der Belagträgerplatte verbunden ist.

Die Belagträgerplatte sowie der daran befestigte Reibbelag weisen in dem der Belaghaltefeder zugewandten Randbereich eine Nut zur Aufnahme des Fühlers auf.

In montierter Funktionsstellung des Bremsbelages, also wenn dieser in eine Scheibenbremse eingebaut ist, stützt sich an der Belaghaltefeder bzw. an der Haube ein mit einem Bremssattel der Scheibenbremse verspannter Haltebügel ab, wobei der Bremsbelag in einen Belagträgerschacht eines fahrzeugseitigen Bremsträgers unter Federspannung gedrückt wird.

Der genannte Fühler der Verschleißendanzeige ist durch die Belaghaltefeder verliergesichert gehalten, da die Belaghaltefeder so positioniert ist, dass der Verschiebe-, d.h. der Einführweg des Fühlers entsprechend begrenzt ist.

Üblicherweise werden gattungsgemäße Bremsbeläge bislang vormontiert, also einschließlich der Verschleißendanzeige. Dabei ist der Fühler auch in noch nicht montierter Stellung des Bremsbelages durch die Belaghaltefeder verliergesichert.

Allerdings ergeben sich hieraus einige Nachteile, da eine Montage bzw. Demontage des Fühlers bei bereits eingesetzter und mit der Belagträgerplatte verbundener Haube nicht mehr möglich ist.

Dies hat zur Folge, dass ein Austausch des Fühlers in eingebauter Stellung des Bremsbelages, beispielsweise wenn der Fühler defekt ist, nicht möglich ist, so dass der gesamte Bremsbelag ausgewechselt werden muss.

Daneben ist eine entsprechend umfangreiche Bevorratung von Bremsbelagsätzen erforderlich, da, wie erwähnt, die Bremsbeläge aufgrund der unlösbaren Befestigung der Belaghaltefeder an der Belagträgerplatte komplett vormontiert werden.

Der Erfindung liegt daher die Aufgabe zugrunde, einen Bremsbelag der gattungsgemäßen Art so weiterzuentwickeln, dass er einfacher und kostengünstiger herstell- und montierbar ist.

Diese Aufgabe wird durch einen Bremsbelag mit den Merkmalen des Anspruchs 1 gelöst.

Durch diese konstruktive Ausbildung besteht die Möglichkeit, die Verschleißendanzeige bzw. deren Fühler noch dann zu montieren, wenn die Belaghaltefeder bereits mit der Belagträgerplatte unlösbar verbunden ist.

Gegenüber dem Stand der Technik bietet dies erhebliche Vorteile. So ist beispielsweise ein Austausch des Fühlers möglich, wenn dieser defekt ist, ohne dass der gesamte Bremsbelag gewechselt werden muss.

Naturgemäß ist hierdurch eine durchaus bemerkenswerte Kostenersparnis gegeben, vorausgesetzt, der Bremsbelag im Übrigen ist noch funktionsfähig, d.h. der Reibbelag ist noch nicht entsprechend abgenutzt.

Zum Austausch des Fühlers in einem eingebauten Bremsbelag ist lediglich der sich an der Belaghaltefeder abstützende Belaghaltebügel zu lösen, so dass die Belaghaltefeder sich entspannen und der Fühler in den gebildeten Zwischenraum zwischen dem der Belaghaltefeder zugeordneten Rand der Belagträgerplatte und der Belaghaltefeder geschoben und anschließend entnommen werden kann.

Aber nicht nur der Ersatz eines Fühlers ist durch die Erfindung problemlos möglich, sondern auch die Nachrüstung des insoweit als Baueinheit vormontierten Bremsbelages, bei dem die Belaghaltefeder bereits unlösbar mit der Belagträgerplatte verbunden ist und der Reibbelag daran befestigt ist.

Diese vorkonfektionierten Bremsbeläge können nun erst bei Bedarf mit dem Fühler ausgestattet werden. Hierdurch ergibt sich eine kostensenkende vereinfachte Lagerhaltung, ebenso wie eine flexible, bedarfsgerechte Ausrüstung des Bremsbelages.

Nach einer vorteilhaften Weiterbildung der Erfindung ist vorgesehen, dass der Abstand der montierten Belaghaltefeder zur Belagträgerplatte in entspannter oder weitgehend entspannter Stellung, der erfindungsgemäß gleich groß oder größer ist als das zugeordnete Höhenabmaß des Fühlers, durch miteinander korrespondierende Anschläge der Belagträgerplatte einerseits und der Haube anderseits festgelegt ist.

Dabei ist die Haube radial verschiebbar an der Belagträgerplatte angeschlossen. Als Anschlag kann beispielsweise ein Langloch in der Haube vorgesehen sein, indem ein Zapfen der Belagträgerplatte geführt ist, wobei sich das Langloch in Spannrichtung der Belaghaltefeder erstreckt.

Denkbar ist aber auch, in der Belagträgerplatte ein oder mehrere sich ebenfalls in Spannrichtung der Belaghaltefeder erstreckende Nuten vorzusehen, in die Vorsprünge der Haube eingreifen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen erfindungsgemäßen Bremsbelag in Nichtgebrauchsstellung in einer Rückansicht
- Figur 2: den Bremsbelag nach Figur 1 in einer Gebrauchsstellung, gleich- falls in einer Rückansicht.

In den Figuren ist ein insgesamt mit dem Bezugszeichen 1 versehener Bremsbelag einer Scheibenbremse, insbesondere für ein Nutzfahrzeug, dargestellt, der eine Belagträgerplatte 2 aufweist, die auf der nicht sichtbaren Vorderseite einen Reibbelag trägt, der im Funktionsfall eine Bremsscheibe der Scheibenbremse kontaktiert.

An der Belagträgerplatte 2 ist eine in Spannrichtung relativ dazu bewegbare bogenförmige Belaghaltefeder 3 unlösbar befestigt, wozu mit der Belaghaltefeder 3 eine Haube 4 verbunden ist, die radial bewegbar an der Belagträgerplatte 2 befestigt ist.

Zur Befestigung ist im vorliegenden Ausführungsbeispiel in der Haube 4 ein Langloch 9 vorgesehen, in dem ein Zapfen 10 der Belagträgerplatte 2 geführt ist.

Ausgehend von dem der Belaghaltefeder 3 zugewandten Rand 7 der Belagträgerplatte 2, an dem sich die Belaghaltefeder 3 abstützt, erstreckt sich eine zum Rand 7 hin offene Ausnehmung 6 in die Belagträgerplatte 2, die der Aufnahme eines Fühlers 5 einer Verschleißendanzeige dient.

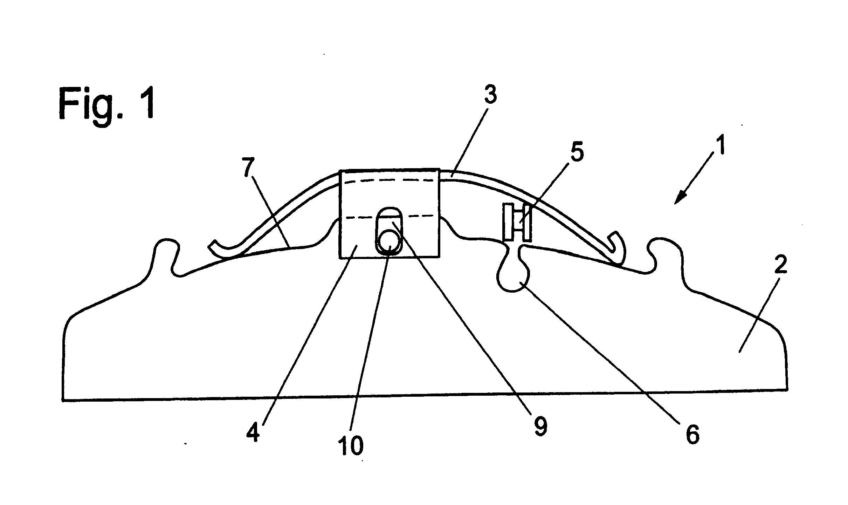

Erfindungsgemäß ist der Abstand der an der Belagträgerplatte 2 befestigten Belaghaltefeder 3 zur Belagträgerplatte 2 in entspannter oder weitgehend entspannter Stellung, wie sie in der Figur 1 gezeigt ist, im Bereich des Fühlers 5 gleich groß oder größer als das zugeordnete Höhenabmaß des Fühlers 5.

Hierdurch kann der Fühler 5 zur Montage bzw. Demontage in den zwischen der Belaghaltefeder 3 und der Belagträgerplatte 2 gebildeten Zwischenraum eingesetzt und in die Ausnehmung 6 geführt bzw. daraus entnommen werden.

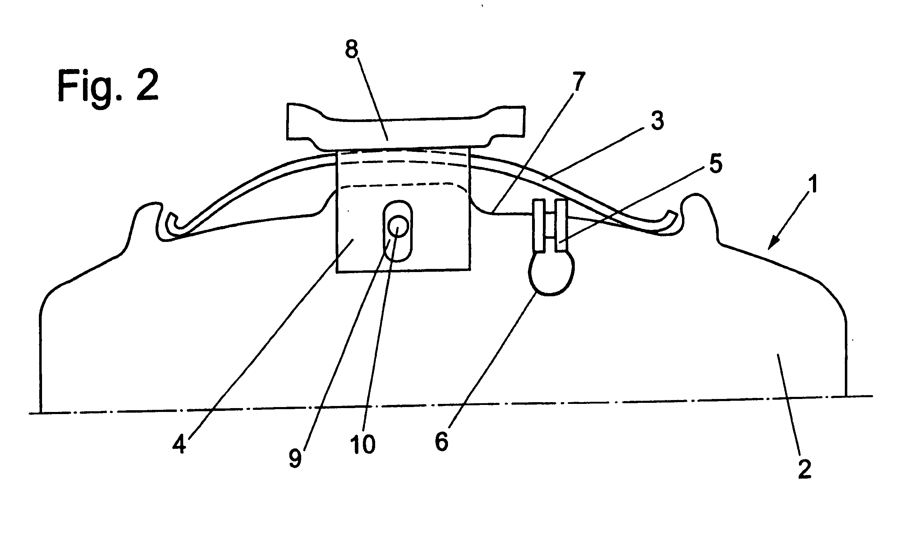

In der Figur 2 ist der Bremsbelag 1 in einer in die Scheibenbremse eingesetzten Funktionsstellung gezeigt, in der sich an der Belaghaltefeder 3 bzw. der Haube 4 ein Belaghaltebügel 8 abstützt, der im Übrigen mit einem nicht dargestellten Bremssattel der Scheibenbremse verspannt ist und den Bremsbelag 1 in einen Belagschacht eines Bremsträgers drückt, unter Verspannung der Belaghaltefeder 3.

In dieser Position ist die Belaghaltefeder 3 in Richtung der Belagträgerplatte 2 bzw. des Randes 7 so verformt, dass der Abstand zwischen dem Rand 7 und der Belaghaltefeder 3 im Bereich des Fühlers 5 kleiner ist als das zugeordnete Höhenabmaß des Fühlers 5, so dass dieser verliergesichert in der Belagträgerplatte 2 gehalten ist.

Der Maximalabstand zwischen der Belagträgerplatte 2 und der Belaghaltefeder 3 wird im Beispiel bestimmt durch den möglichen Verschiebeweg des Zapfens 10 im Langloch 9, der demnach zumindest gleich groß dem Maximalabstand zwischen der Belagträgerplatte 2 und der Belaghaltefeder 3 sein muss.

### Bezugszeichenliste

- 1: Bremsbelag
- 2: Belagträgerplatte
- 3: Belaghaltefeder
- 4: Haube
- 5: Fühler
- 6: Ausnehmung
- 7: Rand
- 8: Belaghaltebügel
- 9: Langloch
- 10: Zapfen

## Patentansprüche

1. Bremsbelag einer Schreibenbremse, insbesondere für ein Nutzfahrzeug, mit einer einen Reibbelag tragenden Belagträgerplatte (2), mit der eine in Spannrichtung relativ dazu bewegbare Belaghaltefeder (3) mittels einer daran befestigten Haube (4) unlösbar verbunden ist und an der eine elektrische Verschleißendanzeige mit einem randseitig eingefügten Fühler (5) angeschlossen ist, wobei der Fühler (5) in montierter Stellung des Bremsbelages (1) durch die mittels eines Belaghaltebügels (8) niedergedrückte Belaghaltefeder (3) unverlierbar gehalten ist, **dadurch gekennzeichnet, dass** der Abstand der montierten Belaghaltefeder (3) zur Belagträgerplatte (2) bei demontiertem Belaghaltebügel (8) und damit in entspannter oder weitgehend entspannter Stellung der Belaghaltefeder (3) im Bereich des Fühlers (5) gleich groß oder größer ist als das zugeordnete Höhenabmaß des Fühlers (5).

2. Bremsbelag nach Anspruch 1, **dadurch gekennzeichnet, dass** der Abstand bestimmt wird von miteinander korrespondierenden Anschlägen der Haube (4) und der Belagträgerplatte (2).

3. Bremsbelag nach Anspruch 1 oder 2, **dadurch gekennzeichnet, dass** die Anschläge der Haube (4) und der Belagträgerplatte (2) gebildet sind durch ein in der Haube (4) oder der Belagträgerplatte (2) vorgesehenes, sich in Spannrichtung der Belaghaltefeder (3) erstreckendes Langloch (9), in dem ein Zapfen (10) der Belagträgerplatte (2) bzw. der Haube (4) geführt ist.

4. Bremsbelag nach einem der vorhergehenden Ansprüche, **dadurch gekennzeichnet, dass** der Fühler (5) in einer in der Belagträgerplatte (2) vorgesehenen Ausnehmung (6) einliegt.

5. Bremsbelag nach einem der vorhergehenden Ansprüche, **dadurch gekennzeichnet, dass** die Ausnehmung (6) im Bereich des der Belaghaltefeder (3) zugewandten Randes (7) vorgesehen ist.

6. Bremsbelag nach einem der vorhergehenden Ansprüche, **dadurch gekennzeichnet, dass** die Ausnehmung (6) zum Rand (7) hin offen ist.

## Claims

1. A brake pad of a disk brake, in particular for a commercial vehicle, having a pad carrier plate (2) which carries a friction pad and to which a pad retaining spring (3) which can be moved in the clamping direction relative to it is connected nonreleasably by means of a cover (4) fastened thereto, and to which an electrical wear end indicator is connected with a sensor (5) which is inserted on the edge side, the sensor (5) being held captively in the mounted position of the brake pad (1) by the pad retaining spring (3) which is pressed down by means of a pad retaining hoop (8), **characterized in that**, when the pad retaining hoop (8) is dismantled and therefore in a relieved or largely relieved position of the pad retaining spring (3), the spacing of the mounted pad retaining spring (3) from the pad carrier plate (2) in the region of the sensor (5) is equal to or greater than the associated height dimension of the sensor (5).

2. The brake pad as claimed in claim 1, **characterized in that** the spacing is defined by mutually corresponding stops of the cover (4) and of the pad carrier plate (2).

3. The brake pad as claimed in claim 1 or 2, **characterized in that** the stops of the cover (4) and of the pad carrier plate (2) are formed by a slot (9) which is provided in the cover (4) or the pad carrier plate (2), extends in the clamping direction of the pad retaining spring (3), and in which a pin (10) of the pad carrier plate (2) and of the cover (4) is guided.

4. The brake pad as claimed in one of the preceding claims, **characterized in that** the sensor (5) lies in a recess (6) which is provided in the pad carrier plate (2).

5. The brake pad as claimed in one of the preceding claims, **characterized in that** the recess (6) is provided in the region of the edge (7) which faces the pad retaining spring (3).

6. The brake pad as claimed in one of the preceding claims, **characterized in that** the recess (6) is open toward the edge (7).

## Revendications

1. Garniture de frein d'un frein à disque, notamment pour un véhicule utilitaire, comprenant un plateau (2) de support de garniture, qui porte une garniture de frein et par lequel un ressort (3) de maintien de la garniture, mobile dans la direction de serrage par rapport à celui-ci, est relié de manière inamovible au moyen d'une calotte (4), qui est fixée et est raccordée par une sonde (5) insérée du côté du bord à l'indicateur électrique d'usure, la sonde (5) étant maintenue, sans possibilité de se perdre lorsque la garniture (1) de frein est à l'état monté, par le ressort (3) de maintien de la garniture repoussé vers le bas au moyen d'un étrier (8) de maintien de la garniture, **caractérisée en ce que** la distance entre le ressort (3) de maintien de la garniture lorsqu'il est monté et le plateau (2) de support de la garniture, lorsque l'étrier (8) de maintien de la garniture est démonté et ainsi en la position desserrée ou dans une grande mesure desserrée du ressort (3) de maintien de la garniture, est dans la zone de la sonde (5) supérieure ou égale à la dimension en hauteur associée de la sonde (5).

2. Garniture de frein suivant la revendication 1, **caractérisée en ce que** la distance est déterminée par des butées qui se correspondent mutuellement de la calotte (4) et du plateau (2) de support de la garniture.

3. Garniture de frein suivant la revendication 1 ou 2, **caractérisée en ce que** les butées de la calotte (4) et du plateau (2) de support de la garniture, sont formées par une boutonnière (9) prévue dans la calotte (4) ou dans le plateau (2) de support de la garniture s'étendant dans la direction de contrainte du ressort (3) de maintien de la garniture et dans laquelle un tenon (10) du plateau (2) de support de la garniture ou de la calotte (4) est guidé.

4. Garniture de frein suivant l'une des revendications précédentes, **caractérisée en ce que** la sonde (5) est mise dans un évidement (6) prévu dans le plateau (2) du support de la garniture.

5. Garniture de frein suivant l'une des revendications précédentes, **caractérisée en ce que** l'évidement (6) est prévu dans la zone du bord (7) tourné vers le ressort (3) de maintien de la garniture.

6. Garniture de frein suivant l'une des revendications précédentes, **caractérisée en ce que** l'évidement (6) est ouvert en direction du bord (7).
